# EUROPEAN PATENT SPECIFICATION

(11) **EP 4 417 376 B1**
(45) Date of publication and mention of the grant of the patent: **08.04.2026**
(21) Application number: 24157583.6
(22) Date of filing: 14.02.2024
(51) Int. Cl.: B25J 1/04

(54) **REACHING AND GRASPING TOOL**
WERKZEUG ZUM ERREICHEN UND GREIFEN
OUTIL D'ENTRÉE ET DE SAISIE

(30) Priority: 15.02.2023 US 202363445766 P
(43) Date of publication of application: 21.08.2024
(73) Proprietor: Unger Marketing International, LLC, Bridgeport CT 06610 (US)
(72) Inventor: Harrington, William, Newtown, 06470 (US); Temple, Brandon M., Stamford, 06905 (US); Huda, Stephen P., Shelton, 06484 (US); Buckley, James M., New Hartford, 06057 (US)
(74) Representative: Potter Clarkson

(56) References cited:
- EP-A1- 3 338 952
- CN-U- 212 653 439
- US-A- 4 374 600
- US-A1- 2022 024 025
- US-B1- 8 029 035

## Description

### CROSS-REFERENCE TO RELATED APPLICATIONS

### BACKGROUND OF THE DISCLOSURE

The subject matter disclosed herein relates to for picking up or grabbing objects, and in particular to a reaching and grasping tool that has an adjustable length.

Reaching and grasping tools have proven useful to extend the reach of users to, for example, grasp items above the user (e.g., on a shelf) or below the user (e.g., on the ground).

These type of tools may be configured with pistol or trigger style grips. Other tools in this category are also known to be configured with inline style grips. Additionally, the tools are known to be configured with one or more features such as rotating gripping heads, telescoping extensions, and others.

While existing reaching and grasping tools re suitable for their intended purposes the need for improvement remains, particularly in providing reaching and grasping tool having the features described herein.
CN 212 653 439 U relates to a multifunctional object picker.
US 2022/024025 A1 lates generally to gripping devices, and more particularly, to an adjustable gripping device that is more adaptable, functional and easier to use, particularly in areas that are difficult to reach.
US 8 029 035 B1 relates generally to item gripping devices, and in particular, to a device for gripping and activating items and devices commonly accessed from the window of an automobile.
EP 3 338 952 A1 is related to reaching and grasping tools. More particularly, the present disclosure is related to reaching and grasping tools that have improved gripping heads.
US 4 374 600 A relates to devices used by handicapped persons, and in particular to devices that extend the range of the handicapped person's reach. Specifically, it is a safety lock for a gripping device for picking up or lifting items and moving them about the area, with the special lock-type safety means to improve safety when in use.

### BRIEF DESCRIPTION OF THE DISCLOSURE

According to one aspect of the disclosure a reaching and grasping tool is provided. The tool includes a pole assembly having a plurality of pole segments slidingly coupled together. A trigger assembly having a handle body and tensioning mechanism is provided. The tensioning mechanism having a cylindrical member rotationally coupled to the handle body and a torsional biasing member operably coupled to the cylindrical member. A jaw assembly having frame, a first jaw, and a second jaw, the first jaw and second jaw being rotationally coupled to the frame. A linkage is operably coupled between the biasing member, the first jaw and the second jaw, the linkage is configured to allow the plurality of pole segments to be slid from a first position with each of the plurality of pole segments, except a first pole segment, substantially slid into the first pole segment and a second extended position with the plurality of pole segments extended.

In addition to one or more of the features described herein, or as an alternative, further embodiments of the tool may include the linkage being made from a thin metallic strip of material.

In addition to one or more of the features described herein, or as an alternative, further embodiments of the tool may include the thin metallic strip being wound around the cylindrical member.

In addition to one or more of the features described herein, or as an alternative, further embodiments of the tool may include the trigger assembly having an actuator rotationally coupled to the handle body, the actuator being operably coupled to rotate the cylindrical member when the actuator is moved from a first position towards a second position.

In addition to one or more of the features described herein, or as an alternative, further embodiments of the tool may include the cylindrical member having a first plurality of gear teeth and the actuator includes a second plurality of gear teeth, the first plurality of gear teeth and second plurality of gear teeth cooperating to rotate the cylindrical member when the actuator is moved.

In addition to one or more of the features described herein, or as an alternative, further embodiments of the tool may include a hinge coupled between one of the plurality of pole segments and the frame, the linkage extending through the hinge.

In addition to one or more of the features described herein, or as an alternative, further embodiments of the tool may include the first jaw and second jaw each having at least one engagement feature.

In addition to one or more of the features described herein, or as an alternative, further embodiments of the tool may include the at least engagement feature being at least one of a plurality of u-shaped slots, a plurality of ribs, and a plurality of teeth.

These and other advantages and features will become more apparent from the following description taken in conjunction with the drawings.

### BRIEF DESCRIPTION OF DRAWINGS

The subject matter, which is regarded as the disclosure, is particularly pointed out and distinctly claimed in the claims at the conclusion of the specification. The foregoing and other features, and advantages of the disclosure are apparent from the following detailed description taken in conjunction with the accompanying drawings in which:
FIG. 1 is a top perspective view of a reaching and grasping tool in accordance with an embodiment;

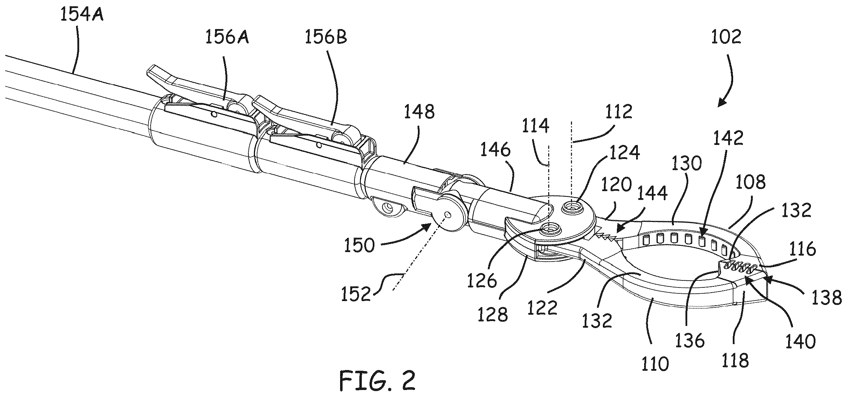

FIG. 2 is an enlarged partial perspective view of a first end of the reaching and grasping tool of FIG. 1;

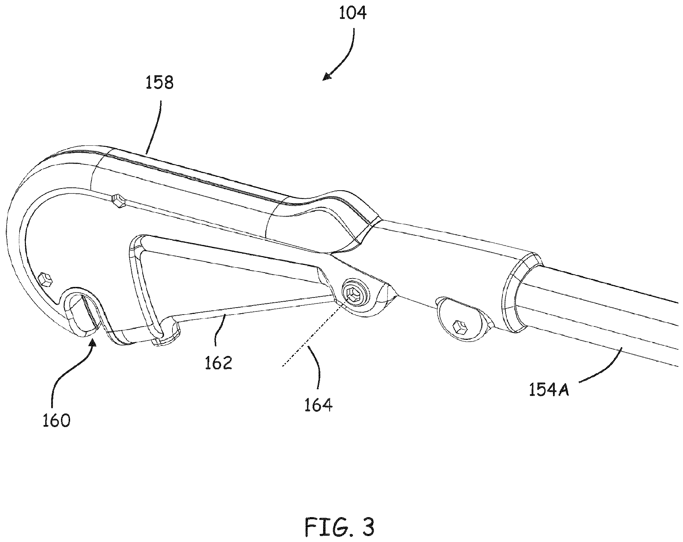

FIG. 3 is an enlarged partial perspective view of a second end of the reaching and grasping tool of FIG. 1;

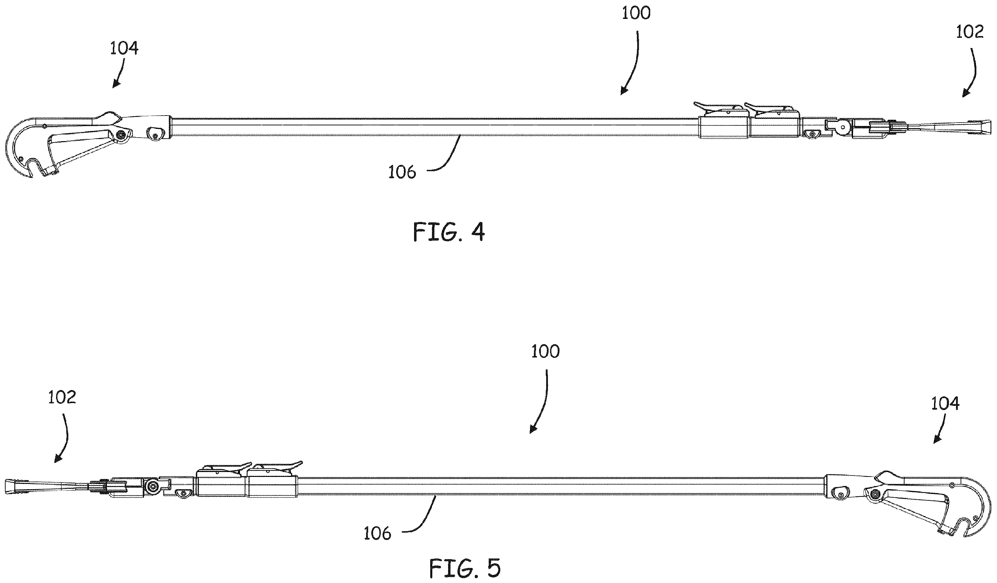

FIG. 4 is a first side view of the reaching and grasping tool of FIG. 1;
FIG. 5 is a second side view of the reaching and grasping tool of FIG. 1;

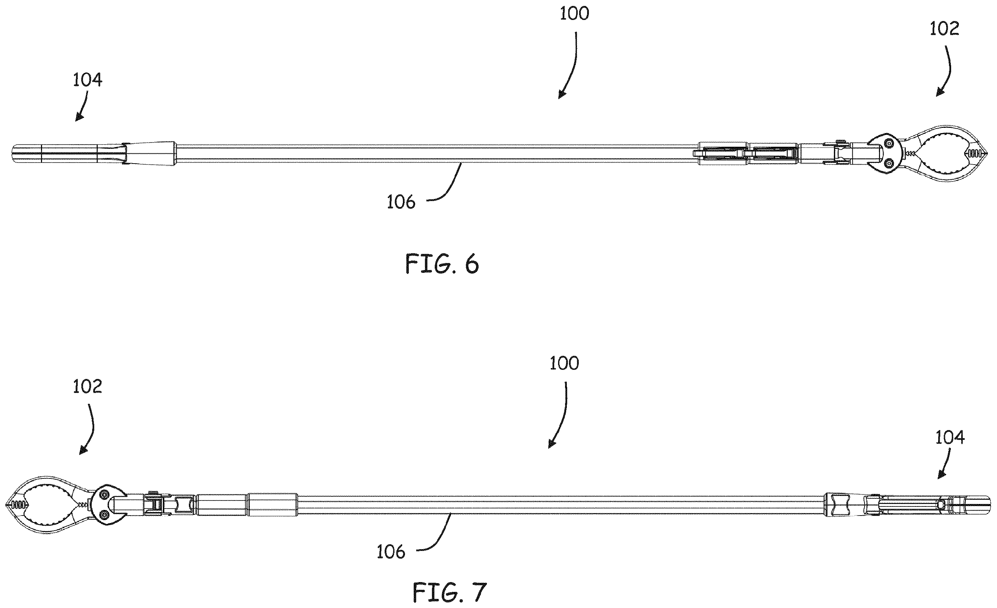

FIG. 6 is a top view of the reaching and grasping tool of FIG. 1;
FIG. 7 is a bottom view of the reaching and grasping tool of FIG. 1;

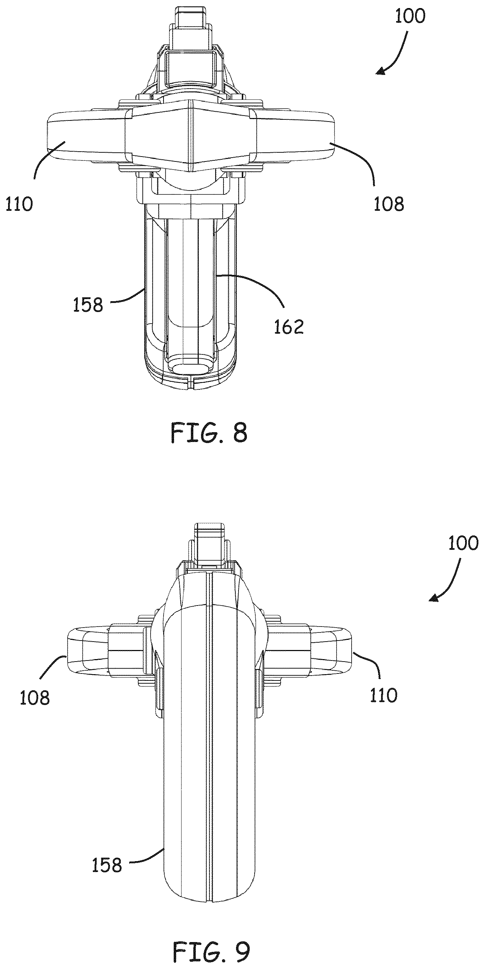

FIG. 8 is a first end view of the reaching and grasping tool of FIG. 1;
FIG. 9 is a second end view of the reaching and grasping tool of FIG. 1;
FIG. 10 is a partial perspective view of the trigger assembly for the reaching and grasping tool of FIG. 1 in accordance with an embodiment; and
FIG. 11 is a partial sectional view of the jaw assembly for the reaching and grasping tool of FIG. 1 in accordance with an embodiment;
FIG. 12 is another partial sectional view of the jaw assembly for the reaching and grasping tool of FIG. 1 in accordance with an embodiment;
FIG. 13 is a perspective view of the reaching and grasping tool of FIG. 1; and
FIG. 14 is another partial sectional view of the jaw assembly for the reaching and grasping tool of FIG. 1 in accordance with another embodiment.

The detailed description explains embodiments of the disclosure, together with advantages and features, by way of example with reference to the drawings.

### DETAILED DESCRIPTION OF THE DISCLOSURE

Embodiments of the present disclosure provide for a reaching and graphing tool having a length that may be selectively changed to allow the distance from the jaws to the trigger to be changed. Still further embodiments of the present disclosure provide for an actuation mechanism that automatically adjusts to allow the changing of a pole length. Still further embodiments of the present disclosure provide for a reaching and grasping tool having jaws that allow for objects to be held using multiple engagement features. Still further embodiments of the present disclosure provide from a jaw assembly that may be selectively angled relative to a central axis of the tool.

Referring now to FIGS., an embodiment of a reaching and grasping tool 100 having a jaw assembly 102, a trigger assembly 104 and an extendable pole assembly 106. The jaw assembly 102 includes a first jaw 108 and a second jaw 110 that are configured to rotate about axis 112, 114 respectively to move between a closed and an open position. When in the open position the ends 116, 118 of the jaws 108, 110 are separated.

In an embodiment, each jaw 108, 110 include an end 116, 119 that is opposite the pivot portions 120, 122 that couple to pivots 124, 126. The pivots 124, 126 define the axis 112, 114. In an embodiment, the pivots 124, 126 are defined by a frame 128 having a slot that receives the pivot portions 120, 122. In an embodiment, the pivots 124, 126 are defined by a pin (not shown for clarity) extends through openings in the frame 128.

The jaws 108, 110 each include an arm portion 130, 132 having an arcuate shape that extends between the pivot portions 120, 122 and the ends 116, 118. In an embodiment, the interface of the arm portion 130, 132 and the end 116, 118 includes an angled surface 134, 136 that extends on an angle inwardly relative to a plane extending through the center of the tool 100. In an embodiment, the jaws 108, 110 each include a plurality of engagement features that facilitate the grasping of objects (e.g. debris on the ground, a jar on a shelf, or a tree branch). In the illustrated embodiment a first engagement features 138 are defined by a plurality of u-shaped slots 140 that extend through the width on opposing inner surfaces of the ends 116, 118. The slots 140 are inwardly facing when the jaws 108, 110 are in the closed position. A second engagement feature includes a plurality of proj ections, such as semi-cylindrical ribs 142 that are disposed on an inside surface of the arm portions 130, 132. A third engagement feature may include a plurality of teeth 144 formed on opposing inner surfaces of the pivot portions 120, 122. In an embodiment, the teeth 144 are defined by a plurality of adjacent triangularly shaped slots that extend through the width of the pivot portions 120, 122. It should be appreciated that while the illustrated embodiment shows three engagement features, this is for example purposes and the claims should not be so limited. In other embodiments, the jaws 108, 110 may have no engagement features, one engagement feature, two engagement features, or three or more engagement features.

The frame 128 includes a body portion 146 that extends in a direction away from the jaws 108, 110. The body portion 146 is rotationally coupled to an end connector 148 arranged on an end of the last segment of the pole assembly 106. In the illustrated embodiment, the body portion 146 is coupled to the end connector 148 by a hinge 150 that allows the selective rotation of the jaw assembly 102 about an axis 152. The hinge 150 may include a pin (not shown) that extends coaxially with the axis 152 and has fasteners on at least one end to allow the hinge 150 to be locked in a desired angular position. In an embodiment, the hinge 150 allows for continuous rotation of the jaw assembly 102. In another embodiment, the hinge 150 allows rotation of the jaw assembly 102 in discrete increments.

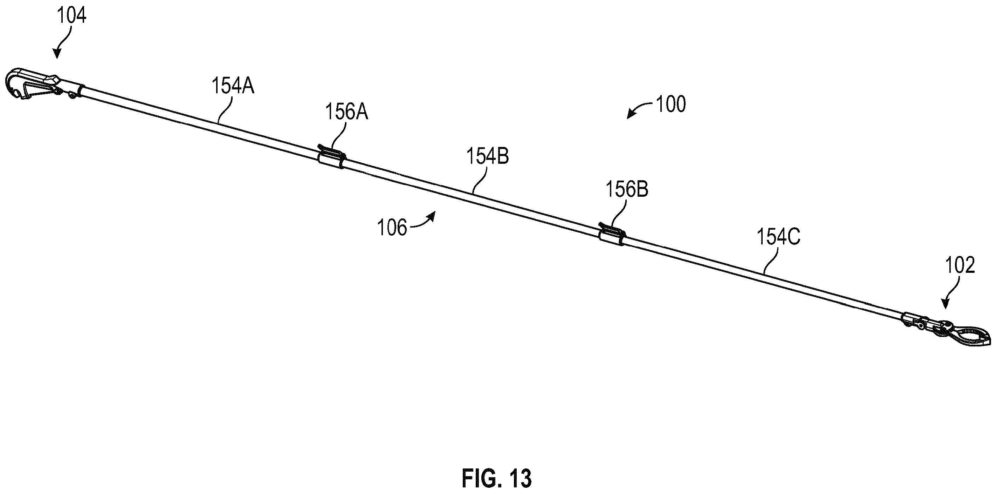

The extendable pole assembly 106 is comprised of a plurality of pole segments, such as pole segments 154A, 154B, 154C (FIG. 13) for example, that are arranged in a telescopic manner. In other words, the pole segments are slidably coupled to each other such that the pole segment 154C may be selectively slid into pole segment 154B, which in turn may be selectively slid into pole segment 154A. It should be appreciated that while the illustrated embodiment shows three pole segments, this is for example purposes and the tool 100 may have more or fewer pole segments than shown without deviating from the teachings provided herein. The pole segments except for the last pole segment, e.g. pole segments 154A, 154B, each have a clamping mechanism 156A, 156B that allows for the selective sliding and locking/fixing of the adjacent pole segment. In an embodiment, the clamping mechanism 156A, 156B includes a lever that is operably coupled to a clamping arrangement that allows for selective locking and releasing of the adjacent pole segment. Each of the pole segments is tubular, having a hollow center portion. As will be discussed in more detail herein, the hollow center portion is sized to allow a linkage to pass therethrough.

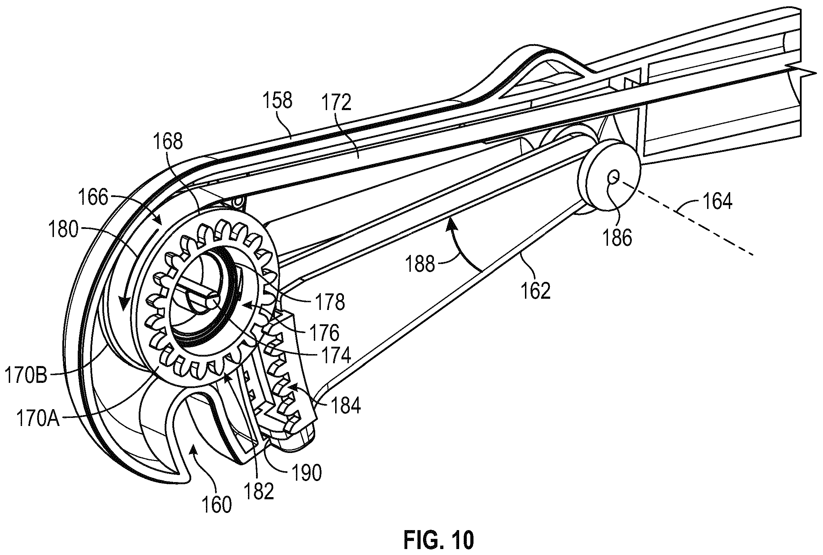

On an opposite side of the pole assembly 106 from the jaw assembly 102 is a trigger assembly 104. In the illustrated embodiment, the trigger assembly 104 couples to the end of pole segment 154A. The trigger assembly 104 includes a body 158 formed from two halves. The body 154 includes an optional slot 160 that may be used to hang the tool 100 on a wall. Pivotally coupled to the body 158 is an actuator 162. The actuator 162 is rotationally coupled to the body 158 to rotate about an axis 164. In an embodiment, a biasing member, such as a torsion spring (not shown) for example is operably coupled to the actuator 162 to bias the actuator counter-clockwise (from the view point of FIG. 10) to assist in allowing the actuator to return to the position shown in FIG. 10).

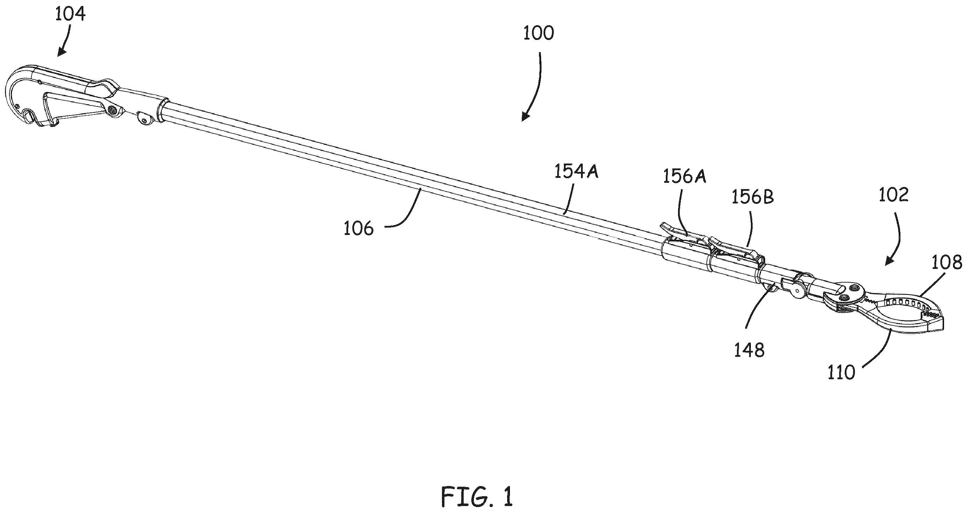

Referring now to FIG. 10, an embodiment is shown of a tensioning mechanism 166. The tensioning mechanism 166 includes a cylindrical member 168 having a pair of sidewalls 170A, 170B on opposite ends that define a slot therebetween. The slot is sized to receive a linkage 172. In the illustrated embodiment, the linkage 172 is made from a thin wide material, similar to a tape measure. The linkage 172 is wound around the cylindrical member 168. The cylindrical member 168 is sized to allow sufficient storage of linkage 172 to allow the plurality of pole segments to be slid from a first position (FIG. 1) with each of the pole segments substantially slid into the first pole segment 154A and an second extended position (FIG. 13) with the pole segments extended.

The cylindrical member 168 rotates about a pin 174 that extends through the sidewall 170B to rotationally couple the cylindrical member 168 to the body 158. The cylindrical member 168 has a substantially hollow interior 176. Disposed within the hollow interior 176 is a biasing member, such as a torsion or clock-spring 178. In the illustrated embodiment, the clock-spring 178 has a first end coupled to the interior wall of the cylindrical member 168 and a second end coupled to the pin 174. The clock-spring 178 biases the cylindrical body 168 in the direction of arrow 180 (counterclockwise from the view of FIG. 10) to keep the linkage 172 in tension. It should be appreciated that as the pole segments 154A, 154B, 154C are extended, the force of extension overcomes the biasing force of the clock-spring 178 and unwinding the linkage 172 from the cylindrical member 168. It should be further appreciated that as the pole segments are moved from an extended position to a retracted position, the biasing force of the clock-spring 178 causes the cylindrical member 168 to rotate and wind the linkage 172 back onto the cylindrical body.

In the embodiment of FIG. 10, the sidewall 170A includes a plurality of gear teeth 182 that extend therefrom. In the illustrated embodiment, the gear teeth 182 are involute gear teeth. The gear teeth 182 engage and cooperate with gear teeth 184 arranged on an end of the actuator 162 opposite the pivot 186. The pivot 186 rotates about a pin (not shown) that is coupled to the body 158 and is coaxial with the axis 164. When the tool operator squeezes the actuator 162, the actuator rotates about the pivot 186 in the direction indicated by arrow 188. As the actuator 162 rotates, the gear teeth 184 engage the gear teeth 182, force from the operator squeezing the actuator 162 overcomes the biasing force of the clock-spring 178 causing the cylindrical member 168 to rotate in the direction of arrow 180 causing the linkage 172 to wind onto the cylindrical member 168. As will be discussed in more detail herein, the winding of the linkage 172 onto the cylindrical member 168 causes the jaws to move from the closed position towards an open position.

When the operator releases the actuator 162, the biasing force of the clock-spring 178 rotates the cylindrical member 168 in the direction opposite that indicated by arrow 180. In this motion, the gear teeth 182 engage the gear teeth 184 and cause the actuator 162 to rotate back to the position shown in FIG. 10. In an embodiment, the actuator 162 includes a projection 190 that acts as a stop against an inside surface of the body 158 and prevents further rotation of the actuator 162.

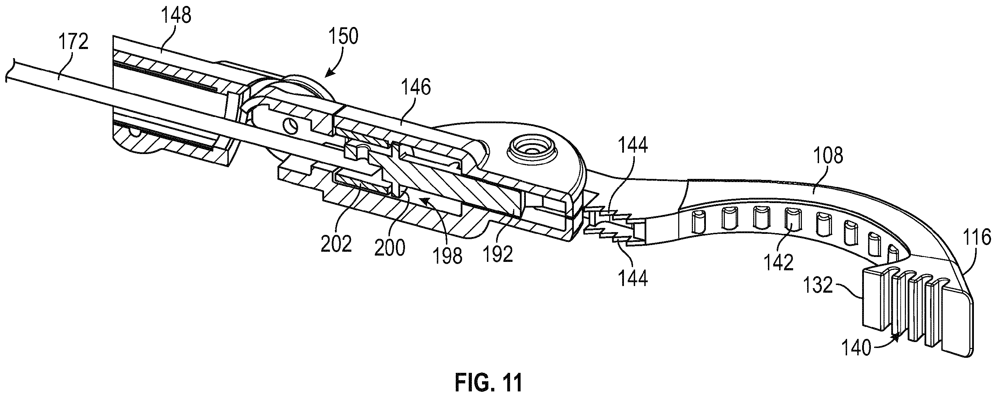

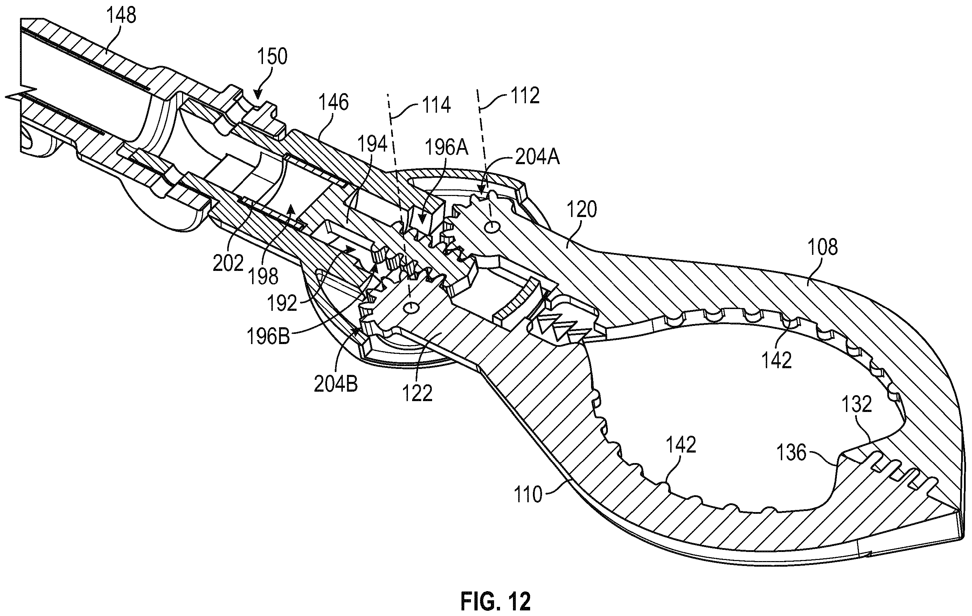

Referring now to FIG. 11 and FIG. 12 an embodiment is shown of the jaw assembly 102. The linkage 172 extends through the length of the pole segments 106, through the hinge 150 and couples to a rack member 192. In an embodiment, the linkage 172 is coupled to the rack member 192 by a pin (not shown). The rack member 192 includes a body portion 194 and a pair of opposing linear rack gear teeth 196A, 196B. The body portion 194 is substantially disposed within a hollow area 198 of the frame body portion 146. In an embodiment, the body portion 194 includes a flange 200 that is sized to fit closely within the hollow area 198 to allow the rack member 192 to translate relative to the frame body portion 146. In an embodiment a biasing member, such as a compression spring 202, is positioned between the flange 200 and an end wall of the hinge 150 to bias the rack member 192 in a direction away from the trigger assembly 104.

In an embodiment, the rack gear teeth 196A, 196B are positioned to engage pinion gear teeth 204A, 204B arranged on the ends of the pivot portions 120, 122 and are positioned to rotate about the pivots 124, 126. It should be appreciated that when the rack member 192 is moved in a direction away from the trigger assembly 104 (e.g. under the biasing force of spring 202), the engagement of the rack gear teeth 196A, 196B on the pinion gear teeth 204A, 204B will cause the jaws 108, 110 to rotate about the pivots 124, 126 into an open position allowing the operator to grasp an object. By squeezing the actuator 162, the linkage 172 overcomes the biasing force of the spring 202 and slides the rack member 192 towards the hinge 150. This in turn causes the rack gear teeth to engage the pinion gear teeth and rotate the jaws 108, 110 towards a closed position.

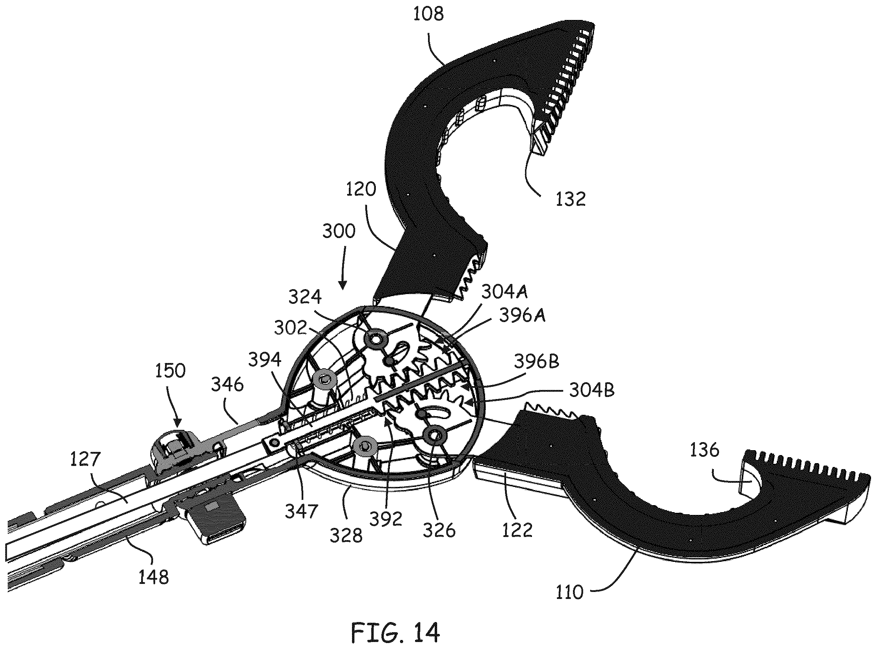

Referring now to FIG. 14, an another embodiment is shown of the jaw end 300 of the reaching and grasping tool 100. In this embodiment, the rack gear teeth 396A, 396B are positioned to engage pinion gear teeth 304A, 304B arranged on the ends of the pivot portions 120, 122 and are positioned to rotate about the pivots 324, 326. It should be appreciated that when the rack member 392 is moved in a direction away from the trigger assembly 104 (e.g. under the biasing force of spring 302), the engagement of the rack gear teeth 396A, 396B on the pinion gear teeth 304A, 304B will cause the jaws 108, 110 to rotate about the pivots 324, 326 into an open position allowing the operator to grasp an object. By squeezing the actuator 162, the linkage 172 overcomes the biasing force of the spring 302 and slides the rack member 392 towards the hinge 150. This in turn causes the rack gear teeth to engage the pinion gear teeth and rotate the jaws 108, 110 towards a closed position.

In the embodiment of FIG. 14, the spring 302 is positioned between the first tooth of the rack member 292 and wall 347 positioned in the body portion 346 of frame 328. The wall 347 includes an opening that allows a body portion 394 of the rack member 392 to extend therethrough. The linkage 172 couples to the end of the body portion 394. In an embodiment, the pinion gear teeth 304A, 304B are sized to allow about 90 degrees of rotation. It should be appreciated that the rack member 392 and pinion gear teeth may be configured to allow more or less rotational travel of the jaws 108, 110.

The following definitions and abbreviations are to be used for the interpretation of the claims and the specification. As used herein, the terms "comprises," "comprising," "includes," "including," "has," "having," "contains" or "containing," or any other variation thereof, are intended to cover a non-exclusive inclusion. For example, a composition, a mixture, process, method, article, or apparatus that comprises a list of elements is not necessarily limited to only those elements but can include other elements not expressly listed or inherent to such composition, mixture, process, method, article, or apparatus.

Additionally, the term "exemplary" is used herein to mean "serving as an example, instance or illustration." Any embodiment or design described herein as "exemplary" is not necessarily to be construed as preferred or advantageous over other embodiments or designs. The terms "at least one" and "one or more" may be understood to include any integer number greater than or equal to one, i.e. one, two, three, four, etc. **The** terms "a plurality" may be understood to include any integer number greater than or equal to two, i.e. two, three, four, five, etc. The term "connection" may include both an indirect "connection" and a direct "connection."

The terms "about," "substantially," "approximately," and variations thereof, are intended to include the degree of error associated with measurement of the particular quantity based upon the equipment available at the time of filing the application. For example, "about" can include a range of ± 8% or 5%, or 2% of a given value.

For the sake of brevity, conventional techniques related to making and using aspects of the invention may or may not be described in detail herein. **In** particular, various aspects of computing systems and specific computer programs to implement the various technical features described herein are well known. Accordingly, in the interest of brevity, many conventional implementation details are only mentioned briefly herein or are omitted entirely without providing the well-known system and/or process details.

## Claims

1. A reaching and grasping tool (100) comprising:
a pole assembly (106) having a plurality of pole segments (154A, 154B, 154C) slidingly coupled together;
a trigger assembly (104) having a handle body (158) and tensioning mechanism (166), the tensioning mechanism (166) having a cylindrical member (168) rotationally coupled to the handle body (158) and a torsional biasing member (178) operably coupled to the cylindrical member (168), the trigger assembly (104) further including an actuator (162) rotationally coupled to the handle body (158), the actuator (162) being operably coupled to rotate the cylindrical member (168) when the actuator (162) is moved from a first position towards a second position;
a jaw assembly (102) having frame (128), a first jaw (108), and a second jaw (110), the first jaw (108) and second jaw (110) being rotationally coupled to the frame (128); and
a linkage (172) operably coupled between the torsional biasing member (178), the first jaw (108) and the second jaw (110), the linkage (172) is configured to allow the plurality of pole segments (154A, 154B, 154C) to be slid from a first position with each of the plurality of pole segments (154A, 154B, 154C), except a first pole segment (154A), substantially slid into the first pole segment (154A) and a second extended position with the plurality of pole segments (154A, 154B, 154C) extended.

2. The tool (100) of claim 1, wherein the linkage (172) is made from a metallic strip of material.

3. The tool (100) of any preceding claim, wherein the metallic strip is wound around the cylindrical member (168).

4. The tool (100) of claim 1, wherein the cylindrical member (168) includes a first plurality of gear teeth (182) and the actuator (162) includes a second plurality of gear teeth (184), the first plurality of gear teeth (182) and second plurality of gear teeth (184) cooperating to rotate the cylindrical member (168) when the actuator (162) is moved.

5. The tool (100) of claim 1, further comprising a hinge (150) coupled between one of the plurality of pole segments (154A, 154B, 154C) and the frame (128), the linkage (172) extending through the hinge (150).

6. The tool (100) of any preceding claim, wherein the first jaw (108) and second jaw (110) each include at least one engagement feature.

7. The tool (100) of claim 6, wherein the at least one engagement feature is at least one of a plurality of u-shaped slots (140), a plurality of ribs (142), and a plurality of teeth (144).

8. The tool (100) of claim 1, wherein the hinge (150) is configured to selectively lock in an angular position.

9. The tool (100) of claim 1, wherein the hinge (150) is rotatable in discrete angular increments.

10. The tool (100) of claim 8, wherein:
the hinge (150) is configured to rotate about a first axis;
the first jaw (108) is rotatable about a second axis; and
the first axis is perpendicular to the second axis.

## Patentansprüche

1. Greif- und Erfassungs-Werkzeug (100), umfassend:
eine Stangenanordnung (106) mit einer Vielzahl von Stangensegmenten (154A, 154B, 154C), die gleitend miteinander verbunden sind;
eine Auslösevorrichtung (104) mit einem Griffkörper (158) und einem Spannmechanismus (166), wobei der Spannmechanismus (166) ein zylindrisches Element (168), das drehbar mit dem Griffkörper (158) verbunden ist, und ein Torsionsvorspannelement (178) aufweist, das funktionsfähig mit dem zylindrischen Element (168) verbunden ist, wobei die Auslösevorrichtung (104) ferner einschließend, einen Aktuator (162), der drehbar mit dem Griffkörper (158) verbunden ist, wobei der Aktuator (162) funktionsfähig verbunden ist, um das zylindrische Element (168) zu drehen, wenn der Aktuator (162) von einer ersten Position in Richtung einer zweiten Position bewegt wird; eine Backenanordnung (102) mit einem Rahmen (128), einer ersten Backe (108) und einer zweiten Backe (110), wobei die erste Backe (108) und die zweite Backe (110) drehbar mit dem Rahmen (128) verbunden sind; und
eine Verbindung (172), die funktionsfähig zwischen dem Torsionsvorspannelement (178), der ersten Backe (108) und der zweiten Backe (110) gekoppelt ist, wobei die Verbindung (172) so konfiguriert ist, dass sie es ermöglicht, die Vielzahl von Stangensegmenten (154A, 154B, 154C) aus einer ersten Position, in der jedes der Anzahl der Stangensegmente (154A, 154B, 154C), mit Ausnahme eines ersten Stangensegments (154A), im Wesentlichen in das erste Stangensegment (154A) eingeschoben ist, und einer zweiten ausgefahrenen Position, in der die Vielzahl der Stangensegmente (154A, 154B, 154C) ausgefahren ist.

2. Werkzeug (100) nach Anspruch 1, wobei die Verbindung (172) aus einem metallischen Materialstreifen hergestellt ist.

3. Werkzeug (100) nach einem der vorstehenden Ansprüche, wobei der Metallstreifen um das zylindrische Element (168) gewickelt ist.

4. Werkzeug (100) nach Anspruch 1, wobei das zylindrische Element (168) eine erste Vielzahl von Zahnradzähnen (182) einschließt und der Aktuator (162) eine zweite Vielzahl von Zahnradzähnen (184) einschließt, wobei die erste Vielzahl von Zahnradzähnen (182) und die zweite Vielzahl von Zahnradzähnen (184) zusammenwirken, um das zylindrische Element (168) in Drehung zu versetzen, wenn der Aktuator (162) bewegt wird.

5. Werkzeug (100) nach Anspruch 1, ferner umfassend ein Scharnier (150), das zwischen einem der Anzahl der Stangensegmente (154A, 154B, 154C) und dem Rahmen (128) angebracht ist, wobei sich die Verbindung (172) durch das Scharnier (150) erstreckt.

6. Werkzeug (100) nach einem der vorstehenden Ansprüche, wobei die erste Backe (108) und die zweite Backe (110) jeweils mindestens ein Eingriffselement einschließen.

7. Werkzeug (100) nach Anspruch 6, wobei das mindestens eine Eingriffselement mindestens eines aus einer Vielzahl von U-förmigen Schlitzen (140), einer Vielzahl von Rippen (142) und einer Vielzahl von Zähnen (144) ist.

8. Werkzeug (100) nach Anspruch 1, wobei das Scharnier (150) so konfiguriert ist, dass es selektiv in einer Winkelposition arretiert werden kann.

9. Werkzeug (100) nach Anspruch 1, wobei das Scharnier (150) in diskreten Winkelschritten drehbar ist.

10. Werkzeug (100) nach Anspruch 8, wobei:
das Scharnier (150) so konfiguriert ist, dass es sich um eine erste Achse dreht;
die erste Backe (108) um eine zweite Achse drehbar ist; und
die erste Achse senkrecht zur zweiten Achse steht.

## Revendications

1. Outil d'atteinte et de saisie (100) comprenant :
un ensemble de perche (106) comportant une pluralité de segments de perche (154A, 154B, 154C) couplés ensemble de manière coulissante ;
un ensemble de gâchette (104) présentant un corps de poignée (158) et un mécanisme de mise en tension (166), le mécanisme de mise en tension (166) présentant un élément cylindrique (168) couplé en rotation par rapport au corps de poignée (158) et un élément de rappel torsionnel (178) couplé de manière fonctionnelle à l'élément cylindrique (168), l'ensemble de gâchette (104) comportant en outre un actionneur (162) couplé en rotation par rapport au corps de poignée (158), l'actionneur (162) étant couplé de manière fonctionnelle pour faire tourner l'élément cylindrique (168) lorsque l'actionneur (162) est déplacé d'une première position vers une seconde position ;
un ensemble de mâchoires (102) présentant un bâti (128), une première mâchoire (108) et une seconde mâchoire (110), la première mâchoire (108) et la seconde mâchoire (110) étant couplées en rotation par rapport au bâti (128) ; et
une tringlerie (172) couplée de manière fonctionnelle entre l'élément de rappel torsionnel (178), la première mâchoire (108) et la seconde mâchoire (110), la tringlerie (172) est configurée pour permettre le coulissement de la pluralité de segments de perche (154A, 154B, 154C) entre une première position dont chacun des segments de perche (154A, 154B, 154C), à l'exception d'un premier segment de perche (154A), est sensiblement coulissé à l'intérieur du premier segment de perche (154A), et une seconde position étendue dont la pluralité de segments de perche (154A, 154B, 154C) est en position étendue.

2. Outil (100) selon la revendication 1, dans lequel la tringlerie (172) est réalisée à partir d'une bande de matériau métallique.

3. Outil (100) selon une quelconque revendication précédente, dans lequel la bande métallique est enroulée autour de l'élément cylindrique (168).

4. Outil (100) selon la revendication 1, dans lequel l'élément cylindrique (168) comporte une première pluralité de dents d'engrenage (182) et l'actionneur (162) comporte une seconde pluralité de dents d'engrenage (184), la première pluralité de dents d'engrenage (182) et la seconde pluralité de dents d'engrenage (184) coopérant pour faire tourner l'élément cylindrique (168) lorsque l'actionneur (162) est déplacé.

5. Outil (100) selon la revendication 1, comprenant en outre une charnière (150) couplée entre l'un des segments de perche (154A, 154B, 154C) et le bâti (128), la tringlerie (172) s'étendant à travers la charnière (150).

6. Outil (100) selon une quelconque revendication précédente, dans lequel la première mâchoire (108) et la seconde mâchoire (110) comportent chacune au moins un élément de prise.

7. Outil (100) selon la revendication 6, dans lequel l'au moins un élément de prise est au moins l'une d'une pluralité de fentes en forme de U (140), d'une pluralité de nervures (142) et d'une pluralité de dents (144).

8. Outil (100) selon la revendication 1, dans lequel la charnière (150) est configurée pour se verrouiller sélectivement dans une position angulaire.

9. Outil (100) selon la revendication 1, dans lequel la charnière (150) peut tourner par pas angulaires discrets.

10. Outil (100) selon la revendication 8, dans lequel :
la charnière (150) est configurée pour tourner autour d'un premier axe ;
la première mâchoire (108) peut tourner autour d'un second axe ; et
le premier axe est perpendiculaire au second axe.
